# FASCICULE DE BREVET EUROPEEN

(11) **EP 1 274 199 B1**
(45) Date de publication et mention de la délivrance du brevet: **11.04.2007**
(21) Numéro de dépôt: 02354099.0
(22) Date de dépôt: 17.06.2002
(51) Int. Cl.: H04L 12/28, H04B 3/54, H05B 37/02, G08C 17/02

(54) **Procédé de télécommande d'un dispositif par transmission radio ou par le secteur, et dispositif correspondant**
Verfahren zur Fernsteuerung eines Gerätes mittels einer Funk- sowie einer Stromnetzverbindung, und Gerät dafür
Method for the remote control of a device through wireless or power mains transmission, and device therefor

(30) Priorité: 26.06.2001 FR 0108589
(43) Date de publication de la demande: 08.01.2003
(73) Titulaire: Somfy SAS, 74300 Cluses (FR)
(72) Inventeur: Symoen, Lionel, 74800 La Roche sur Foron (FR); Gauthier, Laurent, 74440 Taninges (FR)
(74) Mandataire: Bugnion Genève

(56) Documents cités:
- EP-A- 0 921 507
- WO-A-86/06890
- WO-A-98/37493
- DE-C- 19 935 235
- FR-A- 2 728 615
- US-A- 3 852 740
- US-A- 4 803 632

## Description

L'invention concerne le domaine de la commande à distance de dispositifs électriques alimentés par le secteur. Elle concerne plus particulièrement un procédé permettant la commande occasionnelle à distance et/ou la configuration à distance, par la ligne d'alimentation secteur, de ces dispositifs électriques alimentés par le secteur et normalement radiocommandés, ainsi que le dispositif destiné à mettre en oeuvre le dit procédé.

Il est, bien sûr, connu de commander des charges ou de communiquer avec des produits à partir d'informations transmises par le secteur, également lorsque ces charges disposent, par ailleurs, d'un lien de communication radio. Dans le domaine d'activité de la demanderesse, le brevet FR 2728615 décrit ainsi un dispositif appliqué dans un produit commercialisé par la Société BUBENDORFF sous la référence 'id', pour lequel la communication est réalisée à la fois par radio et par un lien domotique à courants porteurs.

Dans un tout autre domaine, celui de l'alarme, le brevet US.3.852.740 décrit cette association radio/secteur. Mais la commande par le secteur se fait également selon une technique de courants porteurs (Power Line Carrier) à fréquence élevée.

Cette technique de communication sur le secteur par courants porteurs est de loin la plus utilisée. Elle nécessite à l'émission et à la réception un appareillage électronique de modulation/ démodulation et de détection de signal qui donne à ce type de solution un coût aussi élevé qu'une solution radio.

Dans un tel système, seul l'état actif ou non-actif d'un circuit électronique est commandé grâce à un signal transmis sur des fils électriques. Lorsque le circuit électronique est actif, des dispositifs sont commandés en fonction de signaux émis de manière non filaire. Lorsque le circuit électronique est inactif, les dispositif sont insensibles aux signaux émis de manière non-filaire.

Les procédés utilisés dans le cadre de l'invention consistent à interrompre l'alimentation de la charge le plus souvent pendant une très courte durée, et le plus souvent au voisinage du zéro de la sinusoïde secteur. Dans l'art antérieur, ces dispositifs ne sont pas associés à un fonctionnement normal par radio.

Dans le brevet US.4.348.582, la ligne est mise en court-circuit, quand on veut transmettre un bit 1, ce qui n'est, bien entendu, possible que pendant un très court intervalle de temps, quand la tension d'alimentation est au voisinage du zéro.

Dans le brevet US.5.264.823, il y a ouverture du circuit pendant un très court intervalle de temps, au voisinage du zéro, à la fois sur le front montant et descendant quand on transmet un bit 1, sans interruption sur un bit 0. Un procédé d'interruption brève est aussi utilisé par le brevet US.7.471.232

Le brevet US.4.408.185 utilise également partiellement l'interruption partielle de l'alimentation

Dans le brevet DE.24.28.173, un mode de réalisation utilise l'interruption de la ligne d'alimentation alternative sur une demi-alternance au moins.

Le brevet FR2.518.335 propose un procédé de télétransmission, caractérisé en ce qu'on choisit, comme mode d'interrogation de la ligne, de couper deux périodes consécutives du courant alternatif de ladite ligne.

Le brevet FR.2798.499 décrit également un moyen d'adressage et de commande de plusieurs appareils à partir d'une information communiquée par plusieurs interruptions consécutives de la tension secteur.

Le brevet FR.2.772.171 de la demanderesse (Gauthier) utilise l'analyse de la disparition particulière de la tension secteur, à deux reprises, mais simplement pour passer dans un mode d'apprentissage de code.

Enfin, on connaît aussi le dispositif divulgué par la demande de brevet internationale WO 98/37493, selon lequel il est fait usage d'un système de programmation en remplacement du boîtier normal de commande pour passer dans un mode de programmation et/ou transfert de données, permettant l'écriture de données depuis un le micro ordinateur vers le microprocesseur et une EEPROM, ou inversement. Dans ce dispositif, relatif à un contrôleur d'alimentation de moteur à courant continu, on ne trouve par de récepteur radio, et il n'est pas prévu que, dans le mode de programmation, le récepteur de télécommande ne fonctionne pas. Le dispositif divulgué ne prévoit pas la possibilité de deux modes de commande, reposant sur deux médias différents et exclusifs l'un de l'autre, au moins dans une phase donnée.

Les dispositifs électriques évoqués au premier paragraphe de cette demande sont, par exemple, des actionneurs électriques pour l'entraînement de fermetures ou protections solaires, dont la commande normale s'effectue à partir d'un émetteur nomade, d'un émetteur mural fixe ou d'un capteur de confort ou météorologique. Dans le cadre de cette commande normale par radio, il est aussi possible de passer dans des modes d'apprentissage particuliers, permettant à l'installateur ou à l'utilisateur d'ajuster précisément des positions de fin de course ou encore de procéder à l'appairage de nouveaux émetteurs.

L'utilisation de transmission radio pour ce genre d'applications présente de nombreux avantages. Par contre, elle rend problématique le test unitaire des appareils et/ou leur préréglage en production.

En effet, dans une phase industrielle, les produits ne sont généralement pas encore appairés, c'est-à-dire qu'un récepteur obéit à tout émetteur. On imagine bien qu'il ne soit pas possible alors de tester plusieurs produits dans un même local, sinon en acceptant de le faire absolument simultanément, et que les ordres valables pour l'un soient exécutés par tous. Or, ces dispositifs radiocommandés peuvent être montés dans des produits différents, et la séquence de tests valable pour l'un n'a aucune raison de s'appliquer aux autres produits. La parade consiste à prendre des précautions de cloisonnement électromagnétique, par exemple avec des cages de Faraday, mais ces équipements sont coûteux.

Même lorsque les produits sont appairés, le problème peut d'ailleurs subsister si trop d'émetteurs fonctionnent sur la même fréquence et se brouillent mutuellement.

Ainsi, le procédé de commande et/ou de configuration à distance d'un dispositif de commande radiocommandé, selon l'invention est défini par la revendication 1.

Selon une caractéristique complémentaire, le moyen d'inhibition, au moins temporaire, de l'exécution des commandes transmises par radio est activé par une action directe ou à distance sur le dispositif.

Selon une autre caractéristique, l'activation du moyen de commande par l'intermédiaire des fils d'alimentation résulte d'une transmission d'une trame de commande à l'aide de la ligne d'alimentation.

Selon d'autres caractéristiques complémentaires du procédé, l'activation du moyen de commande par l'intermédiaire des fils alimentation résulte de l'usage d'un interrupteur électrique, et/ou l'activation du moyen d'inhibition résulte de l'usage d'un interrupteur électrique.

Ajoutons que le procédé comprend deux modes de fonctionnement, un premier mode normal activant la commande par transmission radio, et un deuxième mode spécial activant la commande par les fils d'alimentation, et en ce que dans le deuxième mode de fonctionnement il est prévu au moins une phase de fonctionnement dans laquelle les ordres radio ne sont pas pris en compte.

L'invention concerne aussi le dispositif mettant en oeuvre le procédé, selon lequel, il est raccordé électriquement au réseau alternatif par l'intermédiaire d'une unité de contrôle et comprend au moins :
un récepteur démodulateur radio,
un processeur de commande dont au moins une entrée, dite entrée radio, est reliée à la sortie du récepteur démodulateur radio tandis qu'une deuxième entrée, dite entrée secteur, est reliée à la sortie d'un circuit de mise en forme de la tension secteur,
des modules logiciels de traitement et d'exécution de signaux de commande issus de l'entrée radio et/ou de l'entrée secteur,
et en ce qu'il obéit à l'un ou à l'autre de deux modes de fonctionnement :
   - un premier mode normal activant le module logiciel de traitement radio,
   - un deuxième mode spécial activant le module logiciel de traitement secteur, dans lequel il existe au moins une phase de fonctionnement où les ordres issus des commandes radio ne sont pas pris en compte.

Selon une autre disposition le dispositif raccordé électriquement au réseau alternatif, par l'intermédiaire d'une unité de contrôle, comprend au moins :
un récepteur démodulateur radio,
un processeur de commande dont au moins une entrée, dite entrée radio, est reliée à la sortie du récepteur démodulateur radio tandis qu'une deuxième entrée, dite entrée secteur, est reliée à la sortie d'un circuit de mise en forme de la tension secteur,
des modules logiciels de traitement et d'exécution de signaux de commande issus de l'entrée radio et/ou de l'entrée secteur,
et un moyen d'inhibition de l'exécution de commandes provenant de signaux issus de l'entrée radio.

Selon une caractéristique complémentaire, le dispositif comporte un module logiciel de surveillance de la seconde entrée secteur du processeur de commande, le passage en mode spécial étant réalisé par le module de surveillance, sur détection d'un signal spécifique.

Selon une autre caractéristique, il est prévu une troisième entrée sur le processeur de commande et un module de surveillance de la dite entée, le passage du mode normal, au mode spécial étant réalisé par le module de surveillance, sur détection d'un signal spécifique.

Notons que le retour du mode spécial au mode normal est réalisé soit par la détection d'un signal spécifique sur l'entrée surveillée, soit à l'issue d'une temporisation, soit à l'issue d'une coupure prolongée de l'alimentation.

Ajoutons que les signaux sont communiqués par la ligne d'alimentation sous forme d'interruptions, (ouvertures de la ligne) synchronisées sur le secteur, et que le module de traitement secteur comprend des moyens pour exécuter des commandes d'activation ou de désactivation de la charge ou du moteur.

Enfin, notons que le module de traitement secteur comprend des moyens pour exécuter des commandes d'apprentissage. Un premier avantage de l'invention est de permettre au même moment la réalisation de tests différents du bon fonctionnement de plusieurs dispositifs électriques normalement radiocommandés, placés dans un même local d'essais.

L'invention s'applique également à un apprentissage simple par le produit, par exemple, de ses positions de fins de courses ou de positions intermédiaires. Cet apprentissage peut également concerner la configuration d'ensemble du produit. En effet, sur une même base générale, plusieurs variantes de produits peuvent ne différer que par leur logiciel d'exploitation. Compte tenu de l'accroissement des capacités mémoire, un même produit de base peut contenir l'ensemble de plusieurs applications. Pour des raisons de standardisation et/ou de logistique, il peut être intéressant de retarder la personnalisation des produits. L'invention permet également ce type de configuration du produit, en une étape quelconque du cycle de production, de stockage ou de mise en oeuvre, en lui indiquant, par exemple, quels sont les programmes internes qu'il doit activer.

Un deuxième avantage est de permettre de réaliser des réglages desdits produits et plus généralement de configuration de ces produits sans faire appel aux moyens de radiocommande dont ils sont équipés.

La généralisation des produits de motorisation à de nombreuses applications différentes a pour conséquence que des produits similaires présentent des comportements différents. Les moyens de production actuels nécessitent souvent de travailler sur une même chaîne d'assemblage sur plusieurs produits de types différents, mais semblables extérieurement. L'invention permet d'éviter des fausses manoeuvres résultant des similitudes.

Un troisième avantage est de pouvoir réaliser un détrompage au moment de ces opérations, chaque produit n'obéissant qu'après réception d'un code propre identifiant le type de produit.

Le protocole de communication avec le produit en phase de configuration et de test est suffisamment simple pour être à la portée de l'homme de métier, et donc aussi bien utilisable par un grand fabricant industriel que par le réseau d'entreprises clientes du précédent. Il importe cependant qu'une configuration réalisée lors de la fabrication ne soit pas effacée lors d'une étape suivante, par exemple, lors d'un ajustement de fins de courses chez un industriel intégrant le moteur radiocommandé dans son propre produit, par exemple, volet roulant. L'invention permet que les différentes étapes industrielles relatives à la configuration, au réglage ou au test du produit disposent de commandes qui leur soient propres, et qu'il soit impossible de revenir sur un enregistrement effectué.

Un quatrième avantage réside en la possibilité de blocage de configuration à chaque stade du processus de mise en oeuvre, et de protocoles associés à chacun des stades de mise en oeuvre.

Du fait de la généralisation déjà évoquée, l'identification des produits peut nécessiter d'autres moyens que le simple étiquetage, qui perd souvent son intérêt lorsque le produit est installé dans son produit hôte, qui le masque. Il peut être utile de connaître, par exemple, le nombre de manoeuvres déjà effectuées par un produit installé. Des moyens radio bidirectionnels permettent une communication efficace entre un produit et une console d'interrogation, mais au prix d'un surcoût.

Un cinquième avantage est aussi de permettre une interrogation du produit, soit sur son type, soit sur des éléments de durée de vie.

L'invention repose sur la communication unitaire, provisoire, à faible distance, et par l'intermédiaire des fils d'alimentation secteur, entre un produit radiocommandé et un dispositif d'interruption programmable de ladite alimentation, selon une séquence ou trame constituant le code de l'opération à effectuer. Elle présente de plus la particularité de présenter au moins une phase de fonctionnement pendant laquelle les ordres radio ne sont pas pris en compte lorsque le produit radiocommandé est utilisé dans ce mode de communication par l'intermédiaire des fils d'alimentation secteur.

Selon l'invention, le processeur de commande du produit possède au moins une entrée reliée indirectement au secteur, et une entrée reliée au démodulateur radio, un module logiciel de traitement de l'entrée radio, activé en mode de fonctionnement normal, un module de traitement de l'entrée secteur, activé en mode spécial, et un module logiciel de surveillance de l'entrée secteur activé de manière permanente et permettant le passage du mode normal au mode spécial sur réception d'une trame spécifique, et le retour au mode normal soit après une durée déterminée, soit sur réception d'une deuxième trame spécifique.

Les caractéristiques additionnelles seront décrites plus loin.

Si différents procédés de communication par interruption d'une ligne d'alimentation sont connus de l'homme de métier, personne n'a songé à les mettre en oeuvre dans un dispositif normalement commandé par un récepteur radio pour donner la priorité à la commande secteur, et ainsi entrer dans un mode de communication qui permette de solutionner l'ensemble des problèmes rencontrés dans l'industrie fabriquant de tels dispositifs radiocommandés, comme mentionnés plus haut.

La mise en oeuvre de l'invention ne nécessite que quelques composants passifs supplémentaires sur chaque produit, donc un surcoût modique.

D'autres caractéristiques et avantages de l'invention se dégageront de la description qui va suivre en regard des dessins annexés qui ne sont donnés qu'à titre d'exemples non limitatifs.
La figure 1 représente schématiquement la conception électronique du dispositif de l'invention.
La figure 2 est une vue synoptique du fonctionnement.
La figure 3 donne un exemple de trame de commande.
La figure 4 donne un exemple de réalisation du module de surveillance secteur.
La figure 5 est une vue synoptique illustrant l'identification préalable.
La figure 6 est un schéma synoptique illustrant un autre mode de réalisation.

Dans la description qui va suivre, il sera tout d'abord décrit les dispositifs permettant d'appliquer le procédé selon l'invention.

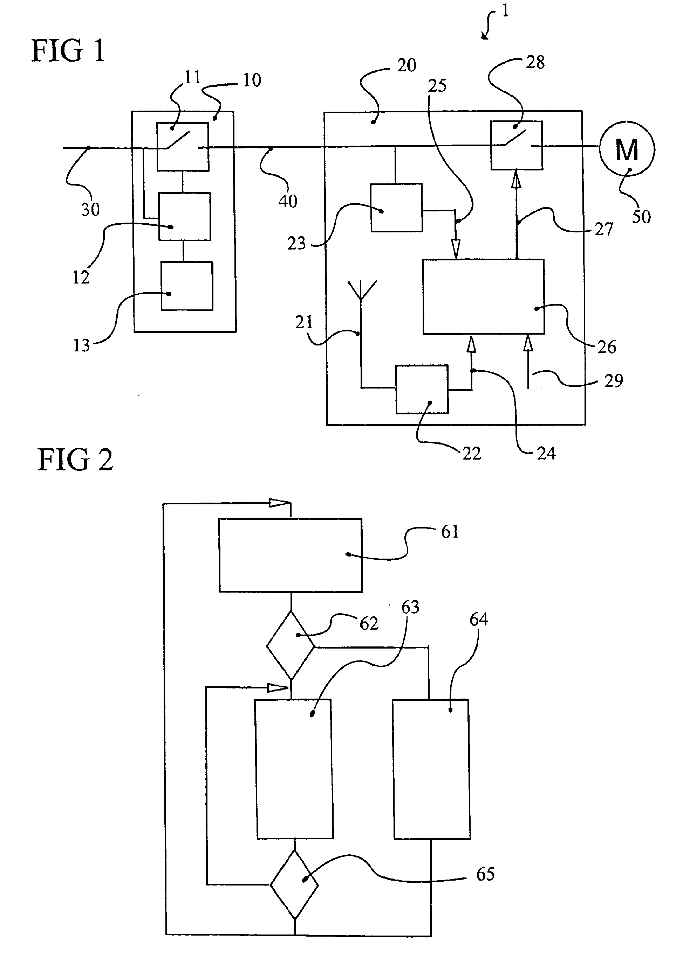

L'ensemble du dispositif représenté à la figure 1, est constitué par une unité ou console de contrôle (10) relié en aval sur une liaison électrique (40) à une unité de commande (20) qui est relié à une charge électrique (50) telle qu'un moteur (M).

L'unité de contrôle (10) est branchée sur le secteur alternatif (30), de manière à provoquer des interruptions d'alimentation de l'unité de commande (20).

L'unité de contrôle (10) comprend un interrupteur commandé (11) uni ou bidirectionnel, dont l'ouverture est synchronisée sur la fréquence du réseau et s'effectue selon une séquence contrôlée par un processeur de contrôle (12), lui-même piloté par une unité de pilotage (13), de type clavier ou automate. A une commande de l'unité de pilotage (13) correspond une séquence, donc une succession d'ouvertures de la ligne constituant une trame élémentaire.

Selon la complexité des ordres à transmettre, la trame correspondant à une commande peut contenir plusieurs trames élémentaires et des identifiants de début et de fin de trame complète, eux-mêmes constitués par des trames élémentaires particulières.

Ce codage reprend alors une configuration connue de l'homme de métier pour toutes les transmissions série comme, par exemple, selon le standard RS-232. Dans le langage de l'homme de métier, on dira alors qu'une trame de commande comprend, par exemple, un bit de « start » (SAB, démarrage), quatre bits d'information (B3, B2, B1, B0) et un bit de « stop » (SOB, arrêt).

La programmation du processeur de contrôle (12) pour obtenir la séquence désirée à partir du protocole choisi est connue de l'homme de métier. Selon une forme d'exécution préférée de l'invention, un seul bit d'information au plus est transmis pendant une alternance du secteur.

La liaison électrique (40) issue de l'unité de contrôle (10) alimente une unité de commande (20). Cette unité de contrôle (10) comprend une antenne (21) et un récepteur démodulateur radio (22), dont la sortie est connectée à une première entrée (24) d'un processeur de commande (26). Ce processeur comprend au moins une deuxième entrée (25) raccordée à la sortie d'un circuit (23) de mise en forme de la tension d'alimentation issue de la liaison électrique (40). Pour ne pas surcharger la figure 1, l'alimentation basse tension des circuits électroniques à partir de la liaison électrique (40) n'a pas été volontairement représentée. Une troisième entrée (29) du processeur de commande (26) peut être prévue, cette troisième entrée étant reliée à un contact actionnable extérieurement, soit directement soit par un aimant, tandis-qu'il pourrait être remplacé par la sortie logique d'un capteur.

La sortie (27) du processeur de commande (26) permet la commande de puissance par un interrupteur (28) de la charge électrique (50). Dans le mode d'exécution proposé à la figure 1, la charge électrique est, par exemple, un moteur (M) et, dans ce cas, cette partie est doublée, de manière à commander le moteur dans l'un ou l'autre sens.

Le processeur de commande (26), dont le fonctionnement est illustré de façon schématique sous forme synoptique par la figure 2, comprend une mémoire de programme agencée de manière à réaliser les fonctions expliquées ci-après.

Un module logiciel (61) de scrutation de la deuxième entrée (25) et de comparaison avec une configuration enregistrée permet d'analyser si la détection d'une coupure sur la ligne d'alimentation est interprétable comme signal de début de communication secteur. Selon le résultat, le premier bloc discriminatoire de test (62) oriente le programme vers l'exécution du module de traitement secteur (63), traitement d'une trame secteur, ou vers l'exécution du module de traitement radio (64), acquisition et traitement d'une trame radio.

Dans une variante de réalisation, le module logiciel (61) pourrait scruter la troisième entrée (29) plutôt que la seconde entrée (25), ce qui permettrait d'entre dans le mode spécial par un autre moyen, que par un signal transmis par la ligne d'alimentation.

On reste dans le module secteur (63), qui permettra éventuellement l'acquisition des trames secteurs suivantes, tant que le deuxième bloc discriminatoire de test (65) n'a pas détecté une trame de fin de message secteur. Ce deuxième test (65) peut être remplacé par une temporisation, ou encore par une la détection d'un changement d'état de la troisième entrée (29).

Une manière de quitter le bouclage sur l'exécution du module de traitement secteur (63) peut être aussi l'interruption de l'exécution du programme par coupure prolongée de l'alimentation électrique. A la nouvelle mise sous tension, le programme redémarre par le module logiciel (61).

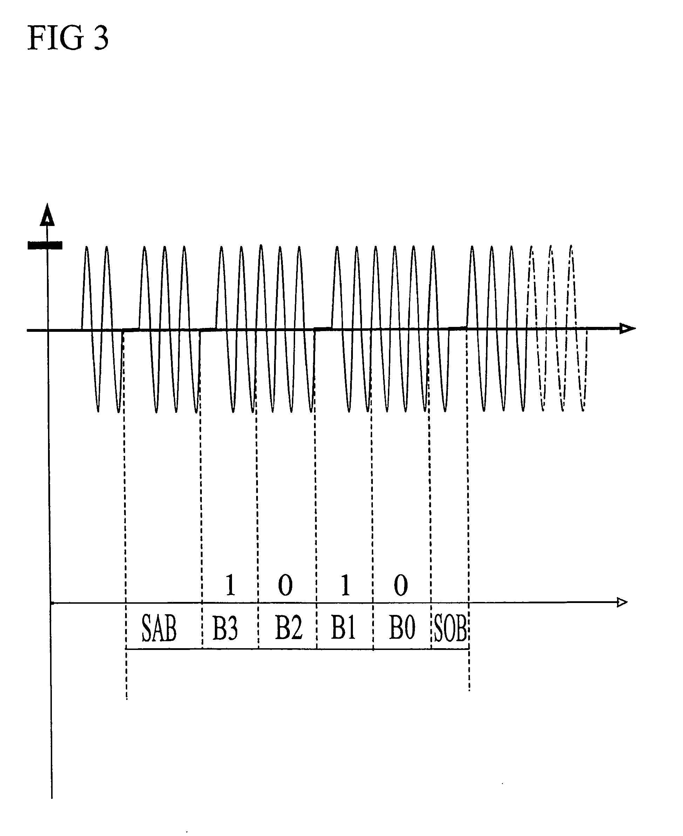

La figure 3 illustre un exemple de trame de commande complète. Dans cette forme de réalisation donnée à titre d'exemple, un bit est transmis toutes les 3 périodes. Un état bas correspond à la transmission de toutes les alternances tandis qu'un état haut coupe une période complète. La trame comporte ici un mot de 4 bits encadré par un indicateur de début (SAB) et un indicateur de fin de mot (SOB). Selon la complexité des ordres donnés, un message complet peut comporter plusieurs mots.

Dans la forme de réalisation donnée pour la trame, on constate que le débit de transmission est très lent, ce qui aurait dû normalement écarter ce type de solution pour une application de commande de moteur et de réglage en position nécessitant une certaine précision au moment de l'arrêt. Si l'invention permet d'utiliser un mode de communication aussi lent, c'est bien parce qu'il peut satisfaire intrinsèquement la seule contrainte forte : celle de l'arrêt instantané.

Il faut, en effet, remarquer que le professionnel ou l'automate de production et réglage utilisant la console de commande peut attendre quelques dixièmes de seconde pour que l'ordre soit exécuté, pourvu qu'il s'agisse d'un ordre de mise en action et non un ordre d'arrêt.

Par contre, un ordre d'arrêt doit être exécuté immédiatement. C'est le cas ici, puisqu'un ordre d'arrêt n'est pas transmis selon le même protocole, mais simplement en ouvrant la liaison électrique (40).

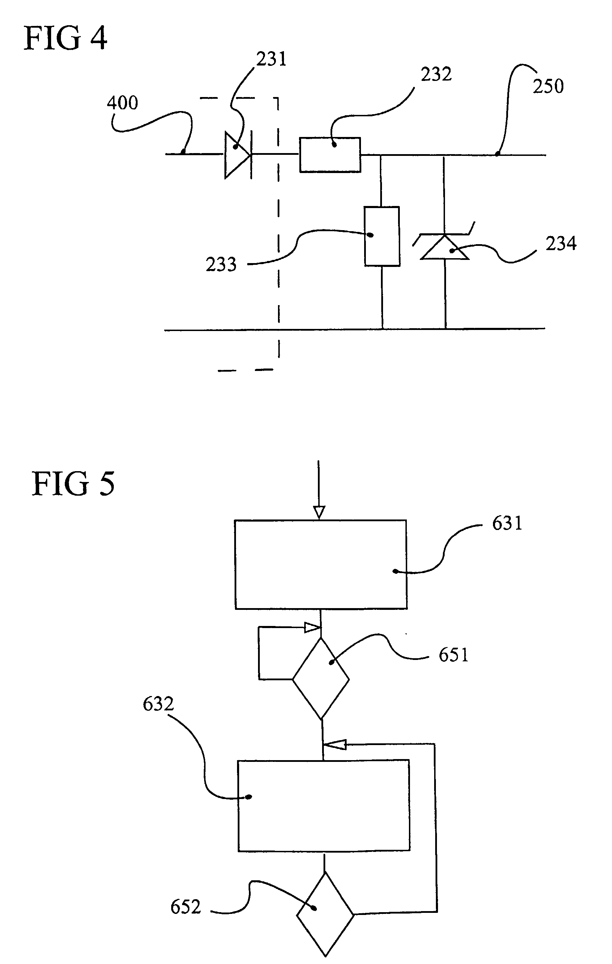

La figure 4 illustre un mode d'exécution du circuit de surveillance du secteur, qui comprend par exemple, un simple pont de résistances (232-233), et avantageusement une diode zener (234), pour générer une tension rectangulaire à partir de la tension du secteur (400) redressée par la diode (231).

Si l'unité de commande (20) illustré à la figure 2 comporte un transformateur ou autre dispositif abaisseur pour l'alimentation des circuits, la ligne d'alimentation du secteur (400) sera avantageusement raccordée à la sortie de ce transformateur.

La figure 5 illustre une variante d'exécution d'une partie du fonctionnement du processeur de commande (26), illustré de façon schématique sous forme synoptique par la figure 2, portant sur l'acquisition et le traitement d'une trame secteur. Selon cette variante, le module de traitement secteur (63) est remplacé par le module (631) tandis que le bloc discriminatoire (65) est remplacé par le bloc discriminatoire (651). Le module (631) permet l'acquisition de trame suivant l'apparition d'un code de début de trame secteur. Le contenu de cette trame est comparé par le bloc discriminatoire (651) à un code identifiant de manière simple, le type de moteur, et logé dans la mémoire ineffaçable du processeur. Si le code lu sur le secteur correspond à cet identifiant, alors, le test (651) permet le passage vers le bloc programme (632) et l'acquisition et traitement des ordres suivants. Sinon, le programme boucle, et le dispositif restera insensible à toutes les autres actions aussi bien secteur que radio, jusqu'à une coupure prolongée du secteur, permettant la réinitialisation complète.

Il va de soi, que l'on pourrait prévoir un interrupteur inverseur, qui permettrait par exemple de commuter la seconde entrée (25) depuis sa position dans laquelle elle est reliée à la sortie du circuit de mise en forme (23), vers une position où elle serait reliée au point haut ou au point bas de l'alimentation du processeur de commande (26). Ainsi, le module logiciel (61), scruterait la seconde entrée (25), le passage d'une tension constante à une tension variable synchronisée sur le secteur serait interprété comme un ordre de passage en mode spécial.

Il est donc possible d'éviter, si plusieurs types de moteurs sont fabriqués ou testés sur un même équipement de production, qu'un moteur obéisse à une séquence qui n'est pas appropriée pour le modèle considéré.

Le souci de pouvoir commander des moteurs normalement radiocommandés par un moyen insensible au parasitage mutuel ne doit pas interdire complètement l'essai d'un fonctionnement radio sur site de production, ne serait-ce que pour vérifier son bon fonctionnement. L'important est que la commande radio émise ne soit pas exécutée par les dispositifs auxquels elle n'est pas adressée, et ceci sans qu'il ait été nécessaire de procéder à un quelconque appariement.

Ceci peut être réalisé simplement par sortie du mode secteur, en émettant, à l'aide de la ligne d'alimentation du seul moteur destiné à recevoir cette commande radio, une trame de commande de sortie du mode secteur (« sortie secteur »).

Mais il est clair que l'homme du métier peut tout aussi bien prévoir à cet effet une commande, par exemple appelée "autorisation fenêtre radio", transmise par trame secteur, qui autorise l'exécution d'un seul ordre reçu par radio, ou d'un nombre limité de commandes, tout en restant dans le mode secteur ou ne retournant automatiquement dans ce mode sitôt exécutée(s) ladite commande ou lesdites commandes radio. En limitant à un seul produit à la fois, et pendant une courte durée, l'usage de cette fenêtre de commande radio, on évite toute perturbation des autres produits en cours de test.

De manière générale, une fois activé le module de traitement secteur permettant la transmission des ordres par le secteur il est donc nécessaire d'activer un programme inhibant au moins temporairement l'exécution des commandes transmises par radio. Il faut donc mettre en place une organisation des programmes logiciels pour satisfaire une fonction d'exclusion temporaire. Par exemple, l'homme du métier peut également concevoir la programmation du processeur (26) de manière à ce qu'il contienne un programme de réception aussi bien des ordres transmis sur le secteur que transmis par radio, et un programme d'inhibition des commandes radio. Ce programme d'inhibition des commandes radio deviendrait par exemple activé par toute réception de commande sous forme de trame secteur

L'inhibition de la transmission par radio peut être réalisée en faisant passer à 0 une variable RAD normalement à 1

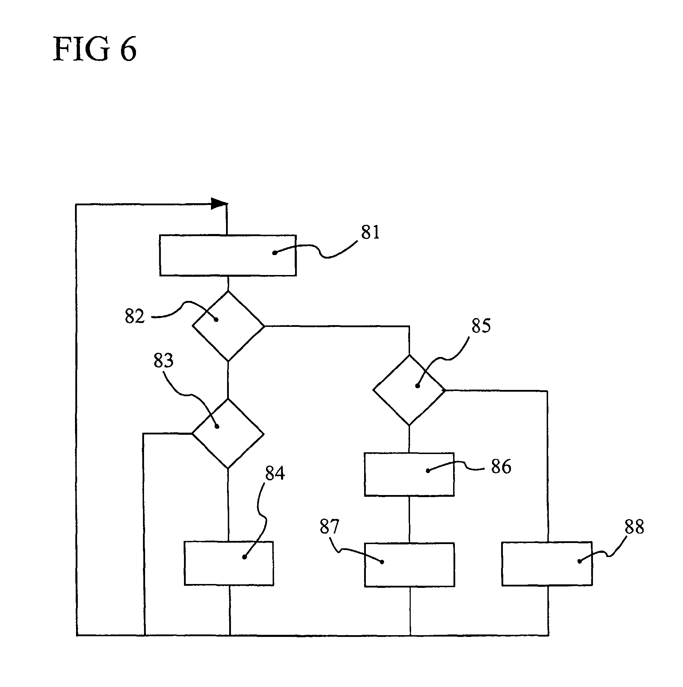

La figure 6 en illustre la structure logique, selon laquelle :

Le module logiciel (81) est un programme de réception d'ordres radio et secteur. Il est ensuite procédé à un test sur la provenance de l'ordre reçu grâce au bloc discriminatoire (82). Selon le résultat, ce bloc discriminatoire oriente vers le bloc discriminatoire (83) si l'ordre est reçu par radio, et sur le bloc discriminatoire (85) si l'ordre est reçu par le secteur.

Le bloc (83) procédé à un test sur la valeur RAD. Si la valeur est à 0 il y a bouclage vers le module logiciel (81), et l'ordre transmis par radio n'est donc pas exécuté, mais si la valeur RAD est égale à 1 il y a poursuite vers le module (84) qui exécute la commande radio, et boucle sur le module (81).

Le bloc (85) teste si la commande reçue est une commande « sortie secteur ».

Si oui il y a poursuite vers le module (88) autorisant à nouveau les commandes radio par mise à 1 de la variable RAD, puis il y a bouclage vers le module (81).

Si non il y a poursuite vers le module (86) qui exécute la commande secteur, puis le module (87) inhibe les commandes radio par mise à 0 de la variable RAD, puis il y a bouclage vers le bloc (81).

Dans le cas de réception d'une première commande secteur, on inhibe donc l'exécution des commandes radio. Leur fonctionnement est restauré à la réception d'une commande « sortie secteur ». On pourrait de la même manière tester une commande d'autorisation d'une seule commande radio, ou d'un nombre limité de commandes et/ou pendant un temps déterminé.

Enfin, selon une variante de ce mode de réalisation, supportée par la figure 6, le bloc discriminateur (83) testerait cette fois l'état de l'entrée (29) reliée à un contact d'interrupteur activable extérieurement, comme décrit en figure 1. Selon l'état de ce contact, tenant lieu de variable RAD, les commandes radio sont ou non exécutées. Les modules (87) et (88) deviennent alors inutiles.

On a compris que l'important dans l'invention est qu'il existe au moins une étape de fonctionnement pendant laquelle, quand le mode spécial est activé, les commandes du mode normal ne sont pas prise en compte.

Il est clair sans autres explications que le procédé décrit permet à l'homme de métier d'implanter, dans le domaine des moteurs radiocommandés :
- le test simultané de plusieurs ensembles pilotés individuellement par des consoles (10) par reconnaissance de trames donnant l'ordre de rotation sens 1 et sens 2 ;
- l'apprentissage de la position courante d'arrêt, en tant que fin de course, par reconnaissance d'un code d'apprentissage FCH ou FCB ;
- l'apprentissage de la position courante d'arrêt, en tant que position intermédiaire spécifique, par reconnaissance d'un code d'apprentissage FCI ;
- la configuration selon un module logiciel A, B, ... , par reconnaissance d'un code de configuration CONFA, CONFB...

De plus, il est possible d'adresser un code d'interrogation au moteur, afin qu'il réponde par une succession d'actions courtes de va-et-vient représentatives soit d'un code, soit d'une grandeur numérique donnée par chiffres successifs.
Enfin, il est à la portée de l'homme de métier de terminer les diverses commandes par un identifiant de verrouillage qui permette de figer une configuration qui vient d'être enregistrée.

## Revendications

1. Procédé de commande et/ou de configuration à distance d'un dispositif de commande radiocommandé alimenté par le secteur et comprenant une charge électrique normalement commandée par radio, **caractérisé en ce qu'**il met en oeuvre un moyen de commande de la charge électrique par l'intermédiaire des fils d'alimentation, et un moyen d'inhibition, au moins temporaire, de l'exécution des commandes transmises par radio.

2. Procédé selon la revendication 1, **caractérisé en ce que** le dispositif de commande radiocommandé permet de commander un moteur et **en ce que** le moyen d'inhibition de l'exécution des commandes transmises par radio autorise la transmission des commandes par les fils d'alimentation.

3. Procédé selon la revendication 1 ou 2, **caractérisé en ce que** le moyen d'inhibition, au moins temporaire, de l'exécution des commandes transmises par radio est activé par une action directe ou à distance sur le dispositif.

4. Procédé selon l'une des revendications 1 à 3, **caractérisé en ce que** l'activation du moyen de commande par l'intermédiaire des fils d'alimentation résulte d'une transmission d'une trame de commande à l'aide de la ligne d'alimentation.

5. Procédé selon l'une des revendications 1 à 3, **caractérisé en ce que** l'activation du moyen de commande par l'intermédiaire des fils d'alimentation résulte de l'usage d'un interrupteur électrique.

6. Procédé selon l'une des revendications 1 à 5, **caractérisé en ce que** l'activation du moyen d'inhibition résulte de l'usage d'un interrupteur électrique.

7. Procédé selon l'une quelconque des revendications précédentes, **caractérisé en ce qu'**il comprend deux modes de fonctionnement, un premier mode normal activant la commande par transmission radio, et un deuxième mode spécial activant la commande par les fils d'alimentation, et **en ce que** dans le deuxième mode de fonctionnement il est prévu au moins une phase de fonctionnement dans laquelle les ordres radio ne sont pas pris en compte.

8. Dispositif (20) de commande et d'alimentation d'une charge électrique (50), raccordé électriquement au réseau alternatif (30) par l'intermédiaire d'une unité de contrôle (10), et permettant la mise en oeuvre du procédé selon l'une quelconque des revendications précédentes, **caractérisé en ce qu'**il comprend au moins :
- un récepteur démodulateur radio (22),
- un processeur de commande (26) dont au moins une entrée, dite entrée radio, est reliée à la sortie (24) du récepteur démodulateur radio tandis qu'une deuxième entrée, dite entrée secteur, est reliée à la sortie (25) d'un circuit de mise en forme de la tension secteur (23),
- des modules logiciels (64, 63) de traitement et d'exécution de signaux de commande issus de l'entrée radio et/ou de l'entrée secteur,
et **en ce qu'**il obéit à l'un ou à l'autre de deux modes de fonctionnement :
- un premier mode normal activant le module logiciel de traitement radio (64),
- un deuxième mode spécial activant le module logiciel de traitement secteur (63), dans lequel il existe au moins une phase de fonctionnement où les ordres issus des commandes radio ne sont pas pris en compte.

9. Dispositif de commande selon la revendication 8, **caractérisé en ce qu'**il comporte un module logiciel de surveillance (61) de la seconde entrée (25) secteur du processeur de commande (26), le passage en mode spécial étant réalisé par le module de surveillance (61), sur détection d'un signal spécifique.

10. Dispositif de commande selon la revendication 8, **caractérisé en ce qu'**il est prévu une troisième entrée (29) sur le processeur de commande (26) et un module de surveillance (61) de ladite entrée, le passage du mode normal, au mode spécial étant réalisé par le module de surveillance, sur détection d'un signal spécifique.

11. Dispositif de commande selon l'une quelconque des revendications 8 à 10, **caractérisé en ce que** le retour du mode spécial au mode normal est réalisé soit par la détection d'un signal spécifique sur l'entrée surveillée, soit à l'issue d'une temporisation, soit à l'issue d'une coupure prolongée de l'alimentation.

12. Dispositif de commande selon l'une quelconque des revendications 8 à 11, **caractérisé en ce que** la charge électrique (50) est un moteur électrique.

13. Dispositif de commande selon l'une quelconque des revendications 8 à 12, **caractérisé en ce que** les signaux sont communiqués par l'unité de contrôle (10) sous forme d'interruptions d'alimentation (avec ouverture de la ligne secteur), synchronisées sur le secteur.

14. Dispositif de commande selon l'une quelconque des revendications 8 à 13, **caractérisé en ce que** le module de traitement secteur (63, 86) comprend des moyens pour exécuter des commandes d'activation ou de désactivation de la charge ou du moteur.

15. Dispositif de commande selon l'une quelconque des revendications 8 à 14, **caractérisé en ce que** le module de traitement secteur (63, 86) comprend des moyens pour exécuter des commandes d'apprentissage.

16. Dispositif de commande selon la revendication 8, **caractérisé en ce qu'**il comprend un moyen d'inhibition de l'exécution de commandes provenant de signaux issus de l'entrée radio.

## Claims

1. A method for remotely controlling and/or configuring a radio controlled control device supplied by the mains and comprising an electric load usually radio controlled, **characterized in that** it implements a means for controlling the electric load via power supply lines, and a means for inhibiting, at least temporarily, the execution of controls transmitted by radio.

2. The method according to claim 1, **characterized in that** the radio controlled control device permits to control a motor and **in that** the means for inhibiting the execution of controls transmitted by radio allows the transmission of controls via the power supply lines.

3. The method according to claim 1 or 2, **characterized in that** the means for inhibiting, at least temporarily, the execution of controls transmitted by radio is activated by a direct or remote action on the device.

4. The method according to one of claims 1 to 3, **characterized in that** the activation of the means for controlling via the power supply lines is brought about by a transmission of a control frame via the power supply lines.

5. The method according to one of claims 1 to 3, **characterized in that** the activation of the means for controlling via the power supply lines is brought about by a use of an electric switch.

6. The method according to one of claims 1 to 5, **characterized in that** the activation of the means for inhibiting is brought about by a use of an electric switch.

7. The method according to one of the preceding claims, **characterized in that** it comprises two operating modes: a first, usual mode activating the control by radio transmission; and, a second, special mode activating the control by the supply lines, and **in that**, in the second operating mode, there is at least one operating phase in which the radio commands are ignored.

8. A device for controlling and supplying an electric load (50), electrically connected with the AC mains (30) through a control unit (10), and permitting the implementation of the method according to one of the preceding claims, **characterized in that** it comprises at least:
- a radio signal receiver and demodulator (22),
- a control processor (26) with at least one input, said "radio input", connected to the output (24) of the radio receiver and demodulator and a second input, said "mains input", connected to the output (25) of a circuit that shapes the AC mains voltage (23);
- logic modules (64, 63) for processing and executing control signals from the radio input and/or the mains input,
and **in that**, it operates according to one of the two operating modes:
- a first, usual mode activating the logic modules (64) for radio processing,
- a second, special mode, activating the logic modules (63) for mains processing, in which there is at least one operating phase in which the commands from radio controls are ignored.

9. The control device according to claim 8, **characterized in that** it includes a logic module (61) for monitoring the second mains input of the control processor (26), the switching in the special mode being triggered by the module for monitoring upon detection of a specific signal.

10. The control device according to claim 8, **characterized in that** it includes a third input (29) in the control processor (26) and a module (61) for monitoring said input, the switching in the usual mode being triggered by the module for monitoring upon detection of a specific signal.

11. The control device according to one of claims 8 to 10, **characterized in that** the returning from the special operating mode to the normal operating mode is triggered by one of: detection of a specific signal on the monitored input, end of a timeout and end of a prolonged power cut off.

12. The control device according to one of claims 8 to 11, **characterized in that** the electric load (50) is an electric motor.

13. The control device according to one of claims 8 to 12, **characterized in that** the signals are transmitted by the control unit (10) in the form of interruptions of the power supply (with opening of the power supply lines) synchronized to the AC mains.

14. The control device according to one of claims 8 to 13, **characterized in that** the logic module (63, 86) for mains processing comprises means for executing activation or deactivation controls of the load or of the motor.

15. The control device according to one of claims 8 to 14, **characterized in that** the logic module (63, 86) for mains processing comprises means for executing learning controls.

16. The control device according to claim 8, **characterized in that** it comprises a means for inhibiting the execution of control from signals from the radio input.

## Patentansprüche

1. Verfahren zum Fernsteuern und/oder Fernkonfigurieren eines funkgesteuerten, aus dem Netz gespeisten Steuergeräts, das eine normalerweise durch Funk gesteuerte elektrische Belastung aufweist, **dadurch gekennzeichnet, dass** es mit einem Steuermittel zum Steuern der elektrischen Belastung mit Hilfe der Speisedrähte und mit einem Mittel arbeitet, das wenigstens vorübergehend die Ausführung der durch Funk übertragenen Befehle verhindert.

2. Verfahren nach Anspruch 1, **dadurch gekennzeichnet, dass** das funkgesteuerte Steuergerät einen Motor zu steuern erlaubt und dass das die Ausführung der durch Funk übertragenen Befehle verhindernde Mittel die Übertragung der durch die Speisedrähte übermittelten Befehle zulässt.

3. Verfahren nach Anspruch 1 oder 2, **dadurch gekennzeichnet, dass** das Mittel, das wenigstens vorübergehend die Ausführung der durch Funk übertragenen Befehle verhindert, durch eine direkte Betätigung oder eine Fernbetätigung des Geräts aktiviert wird.

4. Verfahren nach einem der Ansprüche 1 bis 3, **dadurch gekennzeichnet, dass** die Aktivierung des Steuermittels mit Hilfe der Speisedrähte aus einer Übertragung eines Steuerdatenblocks mit Hilfe der Speiseleitung resultiert.

5. Verfahren nach einem der Ansprüche 1 bis 3, **dadurch gekennzeichnet, dass** die Aktivierung des Steuermittels mit Hilfe der Speisedrähte aus der Verwendung eines elektrischen Schalters resultiert.

6. Verfahren nach einem der Ansprüche 1 bis 5, **dadurch gekennzeichnet, dass** die Aktivierung des Verhinderungsmittels aus der Verwendung eines elektrischen Schalters resultiert.

7. Verfahren nach einem der vorangehenden Ansprüche, **dadurch gekennzeichnet, dass** es zwei Funktionsweisen hat, eine normale erste Funktionsweise, welche die Steuerung durch Funkübertragung aktiviert, und eine spezielle zweite Funktionsweise, welche die Steuerung durch die Speisedrähte aktiviert, und dass bei der zweiten Funktionsweise wenigstens eine Funktionsphase vorgesehen ist, in der die Funkbefehle nicht berücksichtigt werden.

8. Gerät (20) zum Steuern und Speisen einer elektrischen Belastung (50), welches elektrisch mittels einer Kontrolleinheit (10) an das Wechselstromnetz (30) angeschlossen ist und die Durchführung des Verfahrens nach einem der vorangehenden Ansprüche erlaubt, **dadurch gekennzeichnet, dass** es wenigstens folgende Komponenten aufweist:
- einen Funkempfänger-Signalumsetzer (22),
- einen Steuerprozessor (26), bei welchem wenigstens ein Eingang, der sogenannte Funkeingang, an den Ausgang (24) des Funkempfänger-Signalumsetzers angeschlossen ist, während ein zweiter Eingang, der sogenannte Netzeingang, an den Ausgang (25) eines Netzspannungsimpulsformers (23) angeschlossen ist,
- Software-Module (64, 63) zur Verarbeitung und Ausführung der vom Funkeingang und/oder Netzeingang kommenden Steuersignale,
und dass es nach der einen oder der anderen der beiden folgenden Funktionsweisen arbeitet:
- einer normalen ersten Funktionsweise, bei welcher das Software-Modul (64) zur Verarbeitung der vom Funkeingang kommenden Signale aktiviert wird,
- einer speziellen zweiten Funktionsweise, bei der das Software-Modul (63) zur Verarbeitung der vom Netzeingang kommenden Signale aktiviert wird und bei welcher wenigstens eine Funktionsphase existiert, bei der die Funkbefehle nicht berücksichtigt werden.

9. Steuergerät nach Anspruch 8, **dadurch gekennzeichnet, dass** es ein Software-Modul (61) zur Überwachung des zweiten Netzeingangs (25) des Steuerprozessors (26) aufweist, wobei der Übergang zur speziellen Funktionsweise durch das Überwachungsmodul (61) nach Erfassen eines speziellen Signals erfolgt.

10. Steuergerät nach Anspruch 8, **dadurch gekennzeichnet, dass** am Steuerprozessor (26) ein dritter Eingang (29) und ein diesen Eingang überwachendes Modul (61) vorgesehen sind, wobei der Übergang von der normalen Betriebsweise zur speziellen Betriebsweise durch das Überwachungsmodul nach Erfassen eines speziellen Signals erfolgt.

11. Steuergerät nach einem der Ansprüche 8 bis 10, **dadurch gekennzeichnet, dass** die Rückkehr der speziellen zur normalen Betriebsweise entweder durch Erfassen eines speziellen Signals am überwachten Eingang oder nach Ablauf einer Verzögerungszeit oder nach Ablauf einer verlängerten Unterbrechung der Speisung erfolgt.

12. Steuergerät nach einem der Ansprüche 8 bis 11, **dadurch gekennzeichnet, dass** die elektrische Belastung (50) ein Elektromotor ist.

13. Steuergerät nach einem der Ansprüche 8 bis 12, **dadurch gekennzeichnet, dass** die Signale über die Kontrolleinheit (10) in Form von mit der Netzspannung synchronisierten Unterbrechungen der Speisung (mit Öffnen der Netzleitung) übermittelt werden.

14. Steuergerät nach einem der Ansprüche 1 bis 13, **dadurch gekennzeichnet, dass** das Modul (63, 86) zur Verarbeitung der vom Netzeingang kommenden Signale Mittel aufweist, um Befehle zum Aktivieren oder Desaktivieren der Belastung oder des Motors auszuführen.

15. Steuergerät nach einem der Ansprüche 8 bis 14, **dadurch gekennzeichnet, dass** das Modul (63, 86) zur Verarbeitung der vom Netzeingang kommenden Signale Mittel zum Ausführen von Lernbefehlen aufweist.

16. Steuergerät nach Anspruch 8, **dadurch gekennzeichnet, dass** es Mittel zur Verhinderung der Ausführung von Befehlen aufweist, welche von Signalen herrühren, die vom Funkeingang kommen.
